# EUROPEAN PATENT APPLICATION

(11) **EP 4 797 658 A1**
(43) Date of publication of application: **26.08.2026**
(21) Application number: 24887718.5
(22) Date of filing: 15.10.2024
(51) Int. Cl.: H04L 67/1008

(54) **EDGE APPLICATION SERVER DISCOVERY METHOD AND APPARATUS**

(30) Priority: 07.11.2023 CN 202311479829
(71) Applicant: HUAWEI TECHNOLOGIES CO., LTD., Shenzhen 518129 (CN)
(72) Inventor: ZHANG, Jian, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2024/125059
(87) International publication number: WO 2025/098105

(57) **Abstract**

A method for discovering an edge application server and an apparatus are provided. According to the method, a first entity receives a first request, where the request is for obtaining information about an EAS that meets an application requirement; a second request is sent to a second entity, where the request includes computational performance required by a first EAS that is determined based on the application requirement; and/or a third request is sent to a third entity, where the request includes transmission performance required by the first EAS that is determined based on the application requirement; and a first response is sent, where the response includes the information about the first EAS. Because the computational performance and the transmission performance jointly determine end-to-end performance, according to the method, computing and/or the transmission performance of an instantiated EAS is optimized based on a requirement of an application for the computing and/or transmission performance, or instantiation is performed on an EAS based on the requirement of the application for the computing and/or transmission performance, the procedure of discovering the EAS based on the computational performance and the transmission performance can better meet an application requirement and improve user experience.

## Description

### CROSS-REFERENCE TO RELATED APPLICATIONS

This application claims priority to Chinese Patent Application No. 202311479829.X, filed with the China National Intellectual Property Administration on November 7, 2023 and entitled "METHOD FOR DISCOVERING EDGE APPLICATION SERVER AND APPARATUS", which is incorporated herein by reference in its entirety.

### TECHNICAL FIELD

Embodiments of this application relate to the field of communication technologies, and in particular, to a method for discovering a method for discovering an edge application server and an apparatus.

### BACKGROUND

In recent years, a mobile edge computing (mobile edge computing, MEC) solution is proposed to meet the requirements for low delay, local analysis and processing of data, bandwidth, and costs in some scenarios.

The MEC is a distributed computing manner based on a mobile communication network, and may be considered as a cloud server that runs at an edge of a mobile network and runs a specific task. MEC computing and storage resources are provided at the edge near users, thereby reducing resource waste of traditional cloud computing backhaul links, and also greatly reducing latency, to meet the requirements of terminal device for expanding computing capability, and ensure high reliability of task processing.

An application deployed in an edge data network (edge data network, EDN) is referred to as an application instance, and specifically refers to an instance (instance) that is deployed and run by a server application program (for example, social media software, 3D game software, augmented reality (augmented reality, AR), or virtual reality (virtual reality, VR)) in the EDN. One application may have one or more edge application servers (edge application servers, EASs) deployed in one or more EDNs. EASs deployed and run in different EDNs may be considered as different EASs of one application. The EASs may share a domain name, and may use an IP address, or may use different IP addresses. The EAS may also be referred to as an edge application (server), the application instance, an edge application instance, an MEC application (server), an EAS function, or the like.

However, how to ensure that the EAS can meet requirements of the application is a problem that needs to be resolved currently.

### SUMMARY

This application provides a method for discovering an edge application server and an apparatus, to request or optimize computational performance and/or transmission performance of an EAS, to meet an application requirement.

According to a first aspect, this application provides a method for discovering an edge application server, applied to a first entity, where the method includes: receiving a first request, where the first request is for requesting to obtain information about an EAS that meets an application requirement; sending a second request to a second entity, where the second request includes computational performance required by the first EAS that is determined based on the application requirement; and/or sending a third request to a third entity, where the third request includes transmission performance required by the first EAS that is determined based on the application requirement; and sending a first response, where the first response includes the information about the first EAS. A state of the first EAS is an instantiated state, or is a state of being instantiable but not instantiated yet.

In the foregoing EAS discovery method, the first entity determines, based on the application requirement, the computational performance and the transmission performance required by the first EAS, to optimize the computational performance and/or the transmission performance of the instantiated EAS based on the computational performance and the transmission performance required by the first EAS, or instantiate the EAS based on a requirement of an application on the computational performance, and/or request to configure a transmission resource for the instantiated EAS based on the transmission performance, to meet the application requirement, for example, an end-to-end delay requirement. Compared with a conventional EAS discovery procedure, a requirement of the EAS for the computational performance is considered, and a requirement of the EAS for the transmission performance is also considered. Because both the computational performance and the transmission performance determine end-to-end performance, the procedure of discovering the EAS based on the computational performance and the transmission performance in this embodiment of this application can better meet the application requirement, and improve user experience.

In a possible implementation, the second request is for requesting the second entity to perform instantiation on the first EAS based on the computational performance required by the first EAS when the state of the first EAS is the state of being instantiable but not instantiated yet.

In a possible implementation, the second request is for requesting the second entity to perform compute resource expansion on the first EAS based on the computational performance required by the first EAS when the first EAS state is the instantiated state.

In a possible implementation, the method further includes: obtaining one or more pieces of the following information: statistics information and/or prediction information of computational performance of at least one EAS, statistics information and/or prediction information of transmission performance of at least one EAS, available computational performance information of at least one EAS, and available transmission performance information of at least one EAS; and the sending the second request to the second entity includes: sending the second request to the second entity based on the application requirement and the obtained information, where the second request is for requesting to perform compute resource expansion on the instantiated first EAS, or the second request is for requesting to perform instantiation on the first EAS that is instantiable but not instantiated yet. A function of the second request is to request the second entity to configure, for the first EAS, a compute resource that can meet the computational performance required by the application, so that the first EAS can meet the computational performance required by the application.

n a possible implementation, the method further includes: obtaining one or more pieces of the following information: statistics information and/or prediction information of computational performance of at least one EAS, statistics information and/or prediction information of transmission performance of at least one EAS, available computational performance information of at least one EAS, and available transmission performance information of at least one EAS; and the sending the third request to the third entity includes: sending the third request to the third entity based on the application requirement and the obtained information. A function of the third request is to request the third entity to configure, for the first EAS, a transmission resource that can meet the transmission performance required by the application, so that the first EAS can meet the transmission performance required by the application.

In a possible implementation, before the sending the first response, the method further includes: obtaining the information about the first EAS from the second entity.

In a possible implementation, after the receiving the first request, the method further includes: sending a second response, where the second response includes one or more pieces of the following information: an identifier of an instantiated EAS, address information of the instantiated EAS, and an identifier of an instantiable EAS; receiving a fourth request, where the fourth request includes an identifier of a second EAS that requests for a connection and/or address information of the second EAS; and the determining, based on the application requirement, the computational performance and the transmission performance required by the first EAS includes: determining that the second EAS cannot meet the application requirement, and determining, based on the application requirement, the computational performance and the transmission performance required by the first EAS.

In a possible implementation, the available computational performance information of the EAS includes one or more pieces of the following information: an EAS identifier, an EAS address, an EAS available compute resource, an EAS expandable compute resource, time required for expanding the EAS, and time required for instantiating the EAS.

In a possible implementation, the available transmission performance of the EAS includes one or more pieces of the following information: the EAS identifier, the EAS address, and an EAS available transmission resource.

In a possible implementation, the statistics information of the computational performance includes one or more pieces of the following information: EAS load information statistics information, EAS delay statistics information, and EAS packet loss rate statistics information; and/or the prediction information about the computational performance includes one or more pieces of the following information: EAS load information prediction information, EAS delay prediction information, and EAS packet loss rate prediction information.

In a possible implementation, the statistics information of the transmission performance includes one or more pieces of the following information: EAS quality of service QoS statistics information, EAS delay statistics information, and EAS packet loss rate statistics information; and/or the prediction information about the transmission performance includes one or more pieces of the following information: EAS quality of service QoS prediction information, EAS delay prediction information, and EAS packet loss rate prediction information.

According to a second aspect, this application provides a method for discovering an edge application server, applied to a second entity, where the method includes: receiving a second request sent by a first entity, where the second request includes computational performance required by a first EAS; performing compute resource expansion or instantiation on the first EAS based on the second request, so that computational performance of the expanded or instantiated first EAS meets the computational performance required by the first EAS; and sending information about the first EAS to the first entity.

In a possible implementation, the second request is for requesting the second entity to perform instantiation on the first EAS that is instantiable but not instantiated yet based on the computational performance required by the first EAS; the second request is for requesting the second entity to perform compute resource expansion on the instantiated first EAS based on the computational performance required by the first EAS; or the second request is for requesting the second entity to determine to perform compute resource expansion or instantiation on the first EAS based on the computational performance required by the first EAS.

In a possible implementation, before the receiving the second request sent by the first entity, the method further includes: sending, to the first entity, available computational performance information of the at least one EAS and/or available transmission performance information of the at least one EAS.

In a possible implementation, the available computational performance information of the EAS includes one or more pieces of the following information: an identifier of the EAS, an address of the EAS, an available compute resource of the EAS, an expandable compute resource of the EAS, time required for expanding the EAS, and time required for instantiating the EAS.

In a possible implementation, the available transmission performance of the EAS includes one or more pieces of the following information: the EAS identifier, the EAS address, and an EAS available transmission resource.

According to a third aspect, this application provides a method for discovering an edge application server, applied to a third entity, where the method includes: receiving a third request sent by a first entity, where the third request includes transmission performance required by a first EAS; and configuring a transmission resource for the first EAS based on the transmission performance.

In a possible implementation, the transmission performance includes a quality of service QoS requirement.

According to a fourth aspect, this application provides a method for discovering an edge application server, applied to a fourth entity, where the method includes: sending one or more pieces of the following information items to the first entity: statistics information of computational performance of at least one EAS, prediction information of computational performance of at least one EAS, statistics information of transmission performance of at least one EAS, and prediction information of transmission performance of at least one EAS.

In a possible implementation, the method further includes: receiving an obtaining request, where the obtaining request includes an identifier of a first EAS and/or an address of the first EAS; and the information sent to the first entity includes one or more pieces of the following information: statistics information of computational performance of the first EAS, prediction information of computational performance of the first EAS, statistics information of transmission performance of the first EAS, prediction information of transmission performance of the first EAS.

In a possible implementation, the statistics information of the computational performance includes one or more pieces of the following information: EAS load information statistics information, EAS delay statistics information, and EAS packet loss rate statistics information; and/or the prediction information about the computational performance includes one or more pieces of the following information: EAS load information prediction information, EAS delay prediction information, and EAS packet loss rate prediction information.

In a possible implementation, the statistics information of the transmission performance includes one or more pieces of the following information: EAS quality of service QoS statistics information, EAS delay statistics information, and EAS packet loss rate statistics information; and/or the prediction information about the transmission performance includes one or more pieces of the following information: EAS quality of service QoS prediction information, EAS delay prediction information, and EAS packet loss rate prediction information.

According to a fifth aspect, an embodiment of this application provides a communication apparatus. The communication apparatus includes a processor. The processor is coupled to a memory, and the memory is configured to store a program or instructions. When the program or the instructions are executed by the processor, the apparatus is caused to implement the method according to any one of the first aspect and the possible implementations of the first aspect.

According to a sixth aspect, an embodiment of this application provides a communication apparatus. The communication apparatus includes a processor. The processor is coupled to a memory, and the memory is configured to store a program or instructions. When the program or the instructions are executed by the processor, the apparatus is caused to implement the method according to any one of the second aspect and the possible implementations of the second aspect.

According to a seventh aspect, an embodiment of this application provides a communication apparatus. The communication apparatus includes a processor. The processor is coupled to a memory, and the memory is configured to store a program or instructions. When the program or the instructions are executed by the processor, the apparatus is caused to implement the method according to any one of the third aspect and the possible implementations of the third aspect.

According to an eighth aspect, an embodiment of this application provides a communication apparatus. The communication apparatus includes a processor. The processor is coupled to a memory, and the memory is configured to store a program or instructions. When the program or the instructions are executed by the processor, the apparatus is caused to implement the method according to any one of the fourth aspect and the possible implementations of the fourth aspect.

According to a ninth aspect, a communication system is provided, including the communication apparatus according to the fifth aspect, the sixth aspect, the seventh aspect, and the eighth aspect.

According to a tenth aspect, an embodiment of this application provides a chip, including a processor. The processor is coupled to a memory, the memory is configured to store instructions, and when the instructions are executed by the processor, the chip is caused to implement the method according to any one of the first aspect to the fourth aspect and the possible implementations of the first aspect to the fourth aspect.

According to an eleventh aspect, an embodiment of this application provides a computer-readable storage medium. The computer-readable storage medium stores instructions. When the instructions are run on a computer, the computer is caused to perform the method according to any one of the first aspect to the fourth aspect and the possible implementations of the first aspect to the fourth aspect.

According to a twelfth aspect, an embodiment of this application provides a computer program product including instructions. When the computer program product runs on a computer, the computer is caused to perform the method according to any one of the first aspect to the fourth aspect and the possible implementations of the first aspect to the fourth aspect.

### BRIEF DESCRIPTION OF DRAWINGS

FIG. 1 is a diagram of a network architecture of a 5G network according to an embodiment of this application;
FIG. 2 is a diagram of a network architecture of a MEC network according to an embodiment of this application;
FIG. 3 is a schematic flowchart of connection and data transmission between an AC and an EAS according to an embodiment of this application;
FIG. 4 is a schematic flowchart of discovering an EES according to an embodiment of this application;
FIG. 5 is a schematic flowchart of discovering an EAS according to an embodiment of this application;
FIG. 6 is a schematic flowchart of instantiating an EAS according to an embodiment of this application;
FIG. 7 is a schematic flowchart of a method for discovering an EAS according to an embodiment of this application;
FIG. 8 is a schematic flowchart of a method for discovering an EAS according to an embodiment of this application;
FIG. 9 is a schematic flowchart of a method for discovering an EAS according to an embodiment of this application;
FIG. 10 is a schematic flowchart of a method for discovering an EAS according to an embodiment of this application;
FIG. 11 is a schematic flowchart of a method for discovering an EAS according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The 5G network architecture defined by 3GPP may be divided into two parts: an access network and a core network. The access network is for implementing a function related to radio access. The core network may include an access and mobility management function (access and mobility management function, AMF) network element, a session management function (session management function, SMF) network element, a policy control function (policy control function, PCF) network element, a user plane function (user plane function, UPF) network element, a unified data management (unified data management, UDM) network element, and the like.

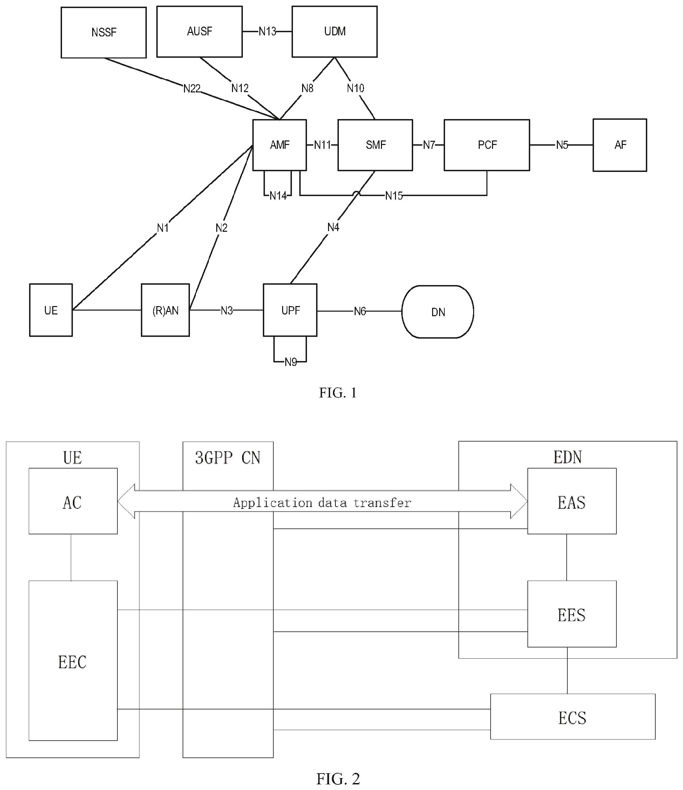

FIG. 1 shows an example of a diagram of a 5G network architecture to which an embodiment of this application is applicable. As shown in FIG. 1, the network architecture may include a terminal device (UE), a radio access network (radio access network, RAN), an AMF, an SMF, a PCF, a UPF, an application function (application function, AF), a network slice selection function (network slice selection function, NSSF), an authentication service function (authentication server function, AUSF), UDM, a data network (data network, DN), and the like.

The terminal device is a device having a wireless transceiver function. The terminal device is connected to an access network device in a wireless manner, to access a communication system. The terminal device may also be referred to as a terminal, UE, a mobile station, a mobile terminal, or the like. The terminal device may be a mobile phone, a tablet computer, a computer with a wireless transceiver function, a virtual reality (virtual reality, VR) terminal, an augmented reality (augmented reality, AR) terminal, a wireless terminal in industrial control (industrial control), a vehicle, a wireless communication module in the vehicle, a telematics box (telematics box, T-box), a road side unit (road site unit, RSU), a terminal device in uncrewed driving, a terminal device in an internet of things (internet of things, IoT), a terminal device in telemedicine (remote medical), a terminal device in a smart grid (smart grid), a terminal device in transportation safety (transportation safety), a terminal device in a smart city (smart city), or a terminal device in a smart home (smart home). This is not limited in embodiments of this application. For ease of description, the UE is used as an example for description in embodiments of this application.

The radio access network (RAN) device is configured to implement a function related to radio access. The radio access network may also be referred to as an access network device or a base station, and is configured to connect a terminal to a wireless network. The radio access network may be a base station (base station), an evolved NodeB (evolved NodeB, eNodeB) in an LTE system or an LTE-advanced system (LTE-Advanced, LTE-A), a next generation NodeB (next generation NodeB, gNB) in a 5G communication system, or a transmission reception point (transmission reception point, TRP), a baseband unit (baseband unit, BBU), a Wi-Fi access point (access point, AP), a base station in a future mobile communication system, an access node in a Wi-Fi system, or the like. The radio access network may alternatively be a module or a unit that completes a part of functions of the base station, for example, may be a central unit (central unit, CU) or a distributed unit (distributed unit, DU). A specific technology and a specific device form that are used by the radio access network are not limited in embodiments of this application. In the following embodiments, the radio access network is referred to as the access network device for description. For ease of description, the RAN is used as an example for description in embodiments of this application.

The AMF is a control plane network element provided by an operator network, and is responsible for access control and mobility management for accessing the operator network by the terminal device, for example, including functions such as mobility status management, allocation of a temporary user identity, and user authentication and authorization. In a future communication system, a mobility management network element may still be the AMF or have another name. This is not limited in this application.

The SMF is a control plane network element provided by the operator network, and is responsible for managing a protocol data unit (protocol data unit, PDU) session of the terminal device. The PDU session is a channel for PDU transmission, and the terminal device and the DN need to perform PDU transmission with each other through the PDU session. The SMF network element is responsible for establishment, maintenance, deletion, and the like of the PDU session. The SMF includes session-related functions such as session management (for example, session establishment, modification, and release, including maintenance of a tunnel between a user plane network element and the access network device), selection and control of the user plane network element, service and session continuity (service and session continuity, SSC) mode selection, and roaming. In a future communication system, a session management network element may still be the SMF or have another name. This is not limited in this application.

The UPF is a gateway provided by an operator and a gateway for communication between the operator network and the DN. The UPF includes user plane-related functions such as data packet routing and transmission, packet detection, service usage reporting, quality of service (quality of service, QoS) processing, uplink packet detection, and downlink data packet storage. In a future communication system, a user plane network element may still be the UPF or have another name. This is not limited in this application.

The PCF is a control plane function network element provided by the operator, for providing PDU session policies to the SMF. The policy may include a charging-related policy, a QoS-related policy, an authorization-related policy, and the like. In a future communication system, a policy control network element may still be the PCF or have another name. This is not limited in this application.

The AF is configured to transfer a requirement of an application side on a network side, for example, a clock service requirement, a QoS requirement, a charging policy requirement, a routing policy requirement, or a user status event subscription. The AF may be a third-party function entity or an application server deployed by the operator. In a future communication system, an application function network element may still be the AF or have another name. This is not limited in this application.

The UDM is a control plane network element provided by the operator, and is responsible for storing information such as a subscription permanent identifier (subscription permanent identifier, SUPI), a credential (credential), a security context (security context), and subscription data of a subscriber in the operator network. The information stored by the UDM may be for authentication and authorization for the terminal device to access the operator network. In a future communication system, a data management network element may still be the UDM or have another name. This is not limited in this application.

The DN is a network located outside the operator network. The operator network may access a plurality of DNs, and a plurality of services may be deployed on the DN, to provide services such as data and/or voice for the terminal device. The UE may access the DN by establishing the PDU session. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be the terminal device, and the mobile phone or the computer of the employee may access information, data resources, and the like in the internal office network of the company.

The NSSF is configured to select a network slice instance set for serving the UE. In a future communication system, a network slice selection function network may still be the NSSF network element or have another name. This is not limited in this application.

The AUSF is configured to authenticate the UE. In a future communication system, an authentication service function network element may still be the NSSF or have another name. This is not limited in this application.

It should be understood that, FIG. 1 is merely an example of an applicable network architecture, and an actually applied network architecture may include more or fewer network elements than those in FIG. 1. For example, the architecture may further include a network data analysis function (network data analytics function, NWDAF), a unified database (unified data repository, UDR), a clock network function (timing network function, TNF), and the like.

MEC is a distributed computing manner based on a mobile communication network. A network architecture of the MEC may be shown in FIG. 2. UE accesses an EDN by using the mobile communication network.

The EDN is a special local data network (local DN) having the edge enabling function, and may use a data network access identifier (data network access identifier, DNAI) and a data network name (data network name, DNN) for identifying. Compared with a central cloud, the EDN may be considered as a local data center and may include a plurality of local data networks.

An EAS is an application instance deployed in the EDN. One application may have one or more EASs deployed in one or more EDNs. EASs deployed and run in different EDNs may be considered as different EASs of one application. The EASs may share a domain name, and may use different IP addresses. The EAS in embodiments of this application may be referred to as an edge application server, or may be referred to as an edge application instance, an application instance, or the like.

An application client (application client, AC) is an entity that is deployed on a terminal device and is equivalent to the EAS, and is configured by the terminal device to obtain application services from the application server. The AC is a client program running on the terminal device, and may be connected to the application server on a cloud to obtain an application service, or may be connected to an EAS that is deployed and run in one or more EDNs to obtain the application service.

An edge enabler server (edge enabler server, EES) is deployed in the EDN, and may provide an enabling capability for the EAS deployed in the EDN, support registration of the EAS, perform authentication and authorization on the terminal device, provide EAS address information for the terminal device, and the like. The EES may also send configuration information or a configuration file (EES profile) of the EES and an identifier of the registered EAS to the edge configuration server (edge configuration server, ECS) through an EES registration process. Generally, the EAS is registered with one EES, or information about one EAS is configured on one EES. The EES is referred to as an EES associated with the EAS. The EES controls and manages the EAS that is registered with or is configured in the EES.

An edge enabler client (edge enabler client, EEC) is an entity that is deployed on a terminal device side and is equivalent to the EES. The EEC is configured to register information about EEC and information about AC with the EES, perform security authentication and authorization, obtain the EAS address information from the EES, and provide an edge computing enabling capability for the AC. The EEC may also interact with a domain name system (domain name system, DNS) of the application to obtain the information about the EAS. The EEC may also obtain the information about the EAS and the EAS address information from other function entities and store the information.

The ECS is responsible for configuring the EDN, for example, providing information about the EES for the terminal device. The ECS may also provide the information about the EES (such as an EES identifier and an EES address) for the EEC.

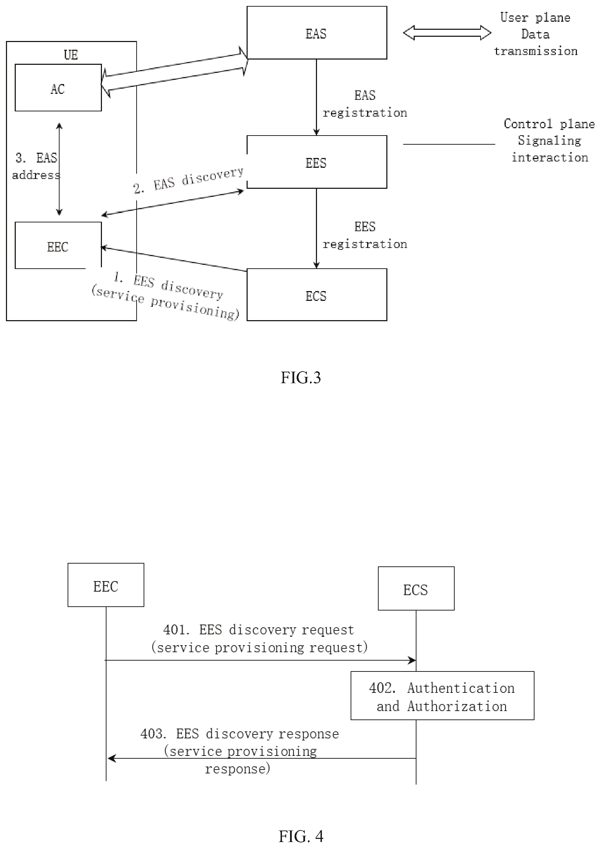

In a current standard, the terminal device may obtain the information about the EAS based on a two-level discovery mechanism, as shown in FIG. 3. The EAS registers with the EES, and the EES registers with the ECS. When the AC on the terminal device needs to access the EAS, the EEC that runs on the terminal device first discovers the EES by using the ECS, which is an EES discovery procedure and may also be referred to as a service provisioning (service provisioning) procedure, as shown in step 1 in FIG. 3. Available edge computing service information related to the EEC is configured in the ECS, and an available EES may be discovered based on location information of the UE, configuration information of the AC, a service requirement, a service preference, connection information, and the like. Then, the EEC obtains the information about the EAS and the EAS address information through discovery of the EES, which is an EAS discovery procedure, as shown in step 2 in FIG. 3. After the EAS discovery procedure is executed, the EEC may send the EAS address information to the AC, as shown in step 3 in FIG. 3. The AC performs connection and data transmission with the EAS based on the EAS address information.

Specifically, the EES discovery procedure may be shown in FIG. 4, and includes the following steps.

Step 401: An EEC sends an EES discovery request (also referred to as a service provisioning request (service provisioning request)) to an ECS. The service provisioning request may include an identifier of the UE (for example, a generic public subscription identifier (generic public subscription identifier, GPSI)), location information of the UE, configuration information (AC profile) of an AC, connection information of the AC, and the like.

In this embodiment of this application, configuration information (profile) may also be referred to as a configuration file, and the following uses the configuration information as an example for description.

Step 402: The ECS performs authentication and authorization. After receiving the service provisioning request, the ECS matches an available EES based on information included in the service provisioning request.

Step 403: The ECS sends an EES discovery response (also referred to as a service provisioning response (service provisioning response)) to the EEC.

If the ECS successfully determines the EES based on the information included in the service provisioning request, the response includes connection information of the EDN, a list of available EESs, and address information of the EES.

If the ECS cannot determine the EES based on the information included in the service provisioning request, the ECS rejects the service provisioning request and provides a rejection reason.

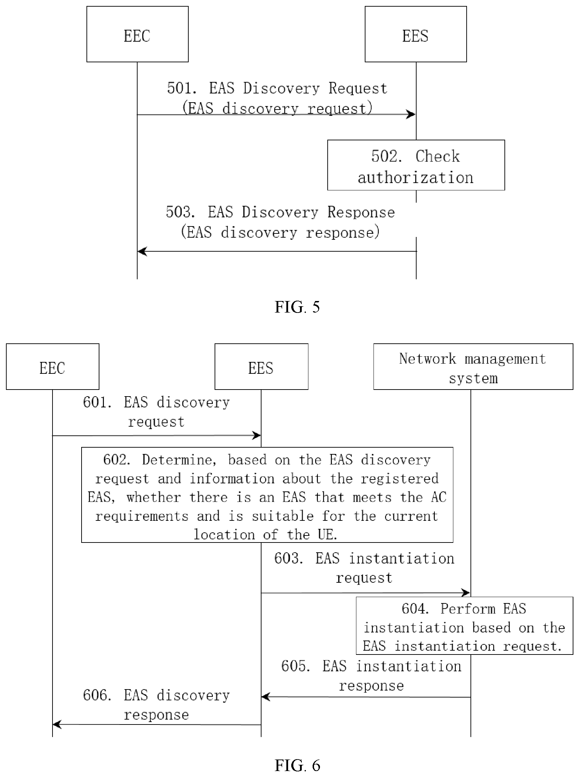

The EAS discovery procedure may be shown in FIG. 5, and includes the following steps.

Step 501: An EEC sends an EAS discovery request (EAS discovery request) to an EES. The EAS discovery request may include an EEC ID and a security credential, and may further include location information of UE and an EAS discovery filter (EAS discovery filter). Further, the EAS discovery request may further include information about a specific EAS, information about a specific type of EAS, or the like.

Step 502: The EES checks authorization.

The EES checks whether the EEC is authorized to discover the requested EAS based on the security credential in the EAS discovery request. If the EEC is authorized and the request includes the EAS discovery filter, the EES may recognize, based on the EAS discovery filter and the location information of the UE, the EAS that requests to be discovered. If the request does not include the EAS discovery filter, the EES may recognize the EAS based on the UE service information and UE location information, or the EES may recognize the EAS by applying an ECSP policy (for example, recognize the EAS based on the location information of the UE). If the EES cannot recognize the corresponding EAS, or if the UE is located outside a geographical or topological service area of the EAS, the EES rejects the request.

Step 503: The EES sends an EAS discovery response (EAS discovery response) to the EEC.

If the EES successfully determines the EAS based on the information included in the EAS discovery request, the response includes information about the determined EAS and EAS address information.

If the EES rejects the EAS discovery request of the EEC, the EAS discovery response may include a rejection cause.

In the foregoing EAS discovery procedure, the EES discovers and selects an EAS based on a requirement of the AC (for example, an AC profile, and an EAS feature (EAS discovery filter) required by the AC) and a registered EAS feature (for example, an EAS profile, and a capability/attribute that may be provided by the EAS). If no EAS registered with the EES meets the requirement of the AC, the EAS returns a failure result in the EAS discovery response. In this case, the required EAS address information cannot be provided for the AC.

When the EES finds no EAS that can meet the requirement of the AC, the EES may request the network management system for EAS instantiation. A procedure of the EAS instantiation may be shown in FIG. 6, and includes the following steps.

Step 601: An EEC sends an EAS discovery request to an EES.

The foregoing EAS discovery request may include an EEC ID and a security credential, and may further include location information of UE and an EAS discovery filter (EAS discovery filter). Further, the EAS discovery request may further include information about a specific EAS, information about a specific type of EAS, or the like.

Step 602: The EES determines, based on the EAS discovery request and the information about the registered EAS, whether an EAS that meets the requirement of the AC and meets the current location of the UE exists.

When EAS that meets the requirement of the AC and meets the current location of the UE does not exist, EAS instantiation is triggered, that is, step 603 is performed.

Step 603: The EES sends a request message (for example, an EAS instantiation request) to a network management system (for example, an ECSP management system or an EAS management system), to request for the EAS instantiation.

Step 604: The network management system performs EAS instantiation based on the EAS instantiation request.

Step 605: The network management system sends a response message to the EES. The response includes an EAS instantiation result (success or failure). If the EAS instantiation successes, the response also includes information about the instantiated EAS (such as an EAS profile). For example, when the EAS instantiation request is sent in step 603, the response message in step 605 may be an EAS instantiation response.

Step 606: The EES sends an EAS discovery response to the EEC. The response includes the information about the instantiated EAS.

In the foregoing EAS instantiation procedure, the EES only considers whether the EAS that meets the requirement of the AC for computational performance (for example, a compute resource and/or a storage resource) exists, and if the EAS that meets the requirement of the AC for the computational performance does not exists, the EAS is dynamically instantiated. During dynamic EAS instantiation, only whether the computational performance of the dynamically instantiated EAS meets the requirement of the AC for the computational performance is considered. However, end-to-end performance (for example, an end-to-end delay) of a connection between the AC and the EAS is determined by both transmission performance (for example, a transmission delay) between the AC and the EAS and computational performance (for example, a computation delay) of the EAS. That only the computational performance of the EAS is considered may cause an end-to-end requirement of the AC, for example, a requirement of an end-to-end delay of the AC to not be met.

To resolve the foregoing problem, an embodiment of this application provide a method for discovering an EAS, to request or optimize computational performance and/or transmission performance of an EAS, to meet an application requirement, for example, an end-to-end delay performance.

The method for discovering the EAS provided in this embodiment of this application may be applied to the network architectures shown in FIG. 1 and FIG. 2, or may be applied to another network architecture having an edge computing function.

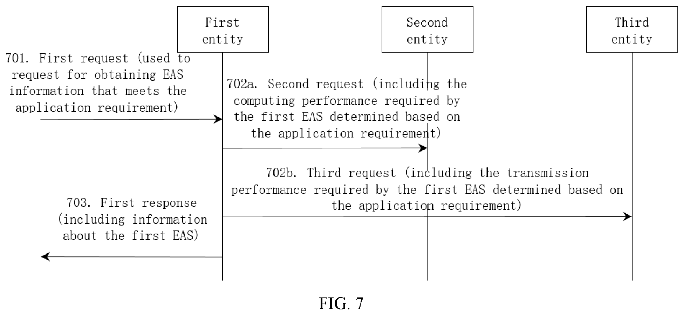

As shown in FIG. 7, a method for discovering an EAS provided in an embodiment of this application may include the following steps.

Step 701: A first entity receives a first request, where the first request is for requesting to obtain information about an EAS that meets an application requirement.

The first entity may be an EES, or may be another entity having an EAS discovery function.

The first request may be sent by an EEC running on a terminal device, and is for discovering the EAS that can meet an application requirement. The foregoing application requirement may be characteristics or a requirement of an EAS required by an AC running on the terminal device. For example, the first request may be an EAS discovery request (EAS discovery request) sent by the EEC, the EAS discovery request includes an EAS discovery filter (EAS discovery filter), and the EAS discovery filter is configured to indicate the feature of the EAS required by the AC, that is, the foregoing application requirement. The feature of the EAS required by the AC may include end-to-end performance of the EAS required by the AC, for example, data transmission performance between the AC and the EAS, and computed overall performance (for example, an overall delay, which may also be referred to as an end-to-end delay) provided by the EAS. In addition, the feature of the EAS required by the AC may also include computational performance of the EAS required by the AC and/or transmission performance of the EAS required by the AC. The computational performance in this embodiment of this application may include performance in aspects such as computing power and storage.

After receiving the first request, the first entity may determine, based on the application requirement in the first request, the computational performance and the transmission performance that the first EAS needs to have to meet the application requirement. A state of the first EAS may be an instantiated state, or may be a state of being instantiable but not instantiated yet.

For example, the application requirement may include the end-to-end performance required by the AC, for example, an end-to-end delay required by the AC, a transmission delay and/or a computation delay that are/is required by the AC. Therefore, the first entity may determine, based on the application requirement, computational performance (which may also be referred to as a compute resource or a computation quality) and transmission performance (which may also be referred to as a transmission resource or a transmission quality) that the EAS required by the AC should meet.

The first entity may further determine whether an EAS that can meet the application requirement in the instantiated EAS exists. If the EAS exists, the first EAS may be any EAS in EASs that meet the application requirement. The first entity may skip step 702a and step 702b, and directly perform step 703. If the EAS does not exist, the first entity may determine to request to perform compute resource optimization on the instantiated first EAS and/or optimize transmission performance for the instantiated first EAS, or determines to request to instantiate the first EAS that be instantiable but not instantiated yet. In other words, the first entity continues to perform step 702a and/or step 702b.

In this embodiment of this application, computing optimization includes performing instantiation on the EAS that is instantiable but not instantiated yet, performing compute resource expansion on the instantiated EAS, or requesting the compute resource and causing a second entity to perform EAS instantiation or compute resource expansion; and transmission optimization includes requesting a third entity to configure the transmission resource whose network meets a corresponding requirement.

Step 702a: The first entity sends a second request to the second entity, where the second request includes the computational performance required by the first EAS that is determined based on the application requirement.

When the network management system can perform instantiation on the EAS (where instantiation on the EAS may also be referred to as instantiation on an EAS that is instantiable but not instantiated yet) or can perform compute resource expansion on the instantiated EAS, the second entity may be the network management system. Alternatively, when another entity can perform instantiation on the EAS or can perform compute resource expansion on the instantiated EAS, the second entity may be another entity having the foregoing function.

A purpose of sending, by the first entity, the second request to the second entity may be to request the second entity to perform compute resource expansion on the instantiated first EAS based on the computational performance required by the first EAS. In other words, the second request is for requesting to perform compute resource expansion on the instantiated first EAS. Correspondingly, after receiving the second request, the second entity performs compute resource expansion on the first EAS based on the computational performance required by the first EAS in the second request, so that the expanded first EAS can meet the computational performance required by the application.

Alternatively, the purpose of sending, by the first entity, the second request to the second entity may be to request the second entity to perform instantiation on the first EAS that is instantiable but not instantiated yet based on the computational performance required by the first EAS. In other words, the second request is for requesting to perform instantiation on the first EAS that is instantiable but not instantiated yet. Correspondingly, after receiving the second request, the second entity performs perform instantiation on the first EAS that is instantiable but not instantiated yet based on the computational performance required by the first EAS in the second request, so that the instantiated first EAS can meet the computational performance required by the application.

Alternatively, the purpose of sending, by the first entity, the second request to the second entity may be to request the second entity to determine, based on the computational performance required by the first EAS, whether to perform compute resource expansion on the instantiated first EAS or to perform instantiation on the first EAS that is instantiable but not instantiated yet. In other words, the first entity only determines computational performance that should be of the EAS that is for providing a service for the terminal device, where the terminal device sends the first request, but does not determine which EAS provides the service for the terminal device. The second entity determines, based on the second request, whether to perform compute resource expansion on the instantiated EAS, or perform instantiation on the EAS that is instantiable but not instantiated yet.

When the second request is for requesting the second entity to perform instantiation on the first EAS that is instantiable but not instantiated yet, or when the second request is for requesting to determine whether to perform compute resource expansion on the instantiated first EAS or perform instantiation the first EAS that is instantiable but not instantiated yet, after sending the second request to the second entity, the first entity may obtain information about the first EAS from the second entity, for example, address information of the first EAS.

Step 702b: The first entity sends a third request to a third entity, where the third request includes the transmission performance required by the first EAS that is determined based on the application requirement.

The third entity may be an entity that can configure a transmission resource for the EAS and that is in the mobile communication network. After receiving the third request, the third entity may configure, based on the transmission performance required by the first EAS, a transmission resource that meets the required transmission performance for the first EAS.

Alternatively, the third entity may also be an entity that can forward the third request. After receiving the third request, the third entity may forward the third request to an entity that can configure the transmission resource for the EAS, so that the entity that can configure the transmission resource for the EAS configures the transmission resource for the first EAS based on the transmission performance required by the first EAS.

Alternatively, the third entity may also be an entity that can respond to the third request and instruct other entities in a mobile communication network to configure transmission resources for the EAS. After receiving the third request, the third entity may instruct, based on the transmission performance required by the first EAS included in the third request, another entity in the mobile communication network to configure the transmission resource for the first EAS.

For example, the third entity may be a network capability exposure function (network exposure function, NEF) network element or a PCF in a 5G core network.

The first entity may perform both step 702a and step 702b. For example, if the first entity determines that the instantiated first EAS provides a service for the terminal device that sends the first request, but current computational performance and transmission performance of the first EAS do not meet computational performance and transmission performance required by the first EAS, or do not meet the application requirement, the first entity determines to perform compute resource expansion and configure the transmission resource for the instantiated first EAS, and performs step 702a and step 702b. A sequence of performing step 702a and step 702b is not limited. For another example, if the first entity determines that the first EAS that is instantiable but not instantiated yet provides a service for the terminal device that sends the first request, the first entity may perform both step 702a and step 702b, so that the second entity performs instantiation on the first EAS based on the computational performance required by the first EAS, and the third entity configures the transmission resource for the first EAS based on the transmission performance required by the first EAS.

Alternatively, the first entity may only perform step 702a, and does not perform step 702b. For example, if the first entity determines that the instantiated first EAS provides a service for the terminal device that sends the first request, current transmission performance of the instantiated first EAS can meet transmission performance required by the first EAS, and current computational performance of the instantiated first EAS cannot meet computational performance required by the first EAS, the first entity may only perform step 702a and does not perform step 702b.

Alternatively, the first entity may only perform step 702b, and does not perform step 702a. For example, if the first entity determines that the instantiated first EAS provides a service for the terminal device that sends the first request, current transmission performance of the instantiated first EAS cannot meet transmission performance required by the first EAS, and current computational performance of the instantiated first EAS can meet computational performance required by the first EAS, the first entity may only perform step 702b and does not perform step 702a.

Step 703: The first entity sends a first response, where the first response includes the information about the first EAS.

After completing compute resource expansion and/or transmission resource configuration of the first EAS, or completing instantiation of the first EAS, the first entity may send the first response, to provide the information about the first EAS. For example, the first entity receives the first request sent by the EEC running on the terminal device, and requests to discover the EAS that can meet the application requirement. In this case, in step 703, the first entity may send information about an expanded first EAS to the EEC, or send information about a newly instantiated first EAS to the EEC.

The information about the first EAS may include an identifier of the first EAS, the address information of the first EAS, and the like.

In a possible implementation, before step 702 is performed, the first entity may further obtain one or more pieces of the following information, to help the first entity determine whether to request to perform compute resource expansion on the instantiated EAS and/or perform transmission resource configuration on the instantiated EAS, to provide a service for the terminal device, or to request to perform instantiation on the EAS that is instantiable but not instantiated yet, and/or perform transmission resource configuration on the instantiated EAS, to provide a service for the terminal device:

### (1) Statistics information and/or prediction information of computational performance of at least one EAS.

The first entity may obtain the statistics information and/or the prediction information of the computational performance of the at least one EAS. The statistics information of the computational performance may include compute resources currently used by a part or all of the at least one EAS, current computational performance parameters, and the like, for example, EAS load information statistics information, EAS delay statistics information, and EAS packet loss rate statistics information. The prediction information of the computational performance may include a compute resource usage status, a predicted computational performance parameter, and the like that are predicted for a part or all of the at least one EAS, for example, EAS load information prediction information, EAS delay prediction information, and EAS packet loss rate prediction information.

Optionally, the first entity may obtain the foregoing information (1) from an NWDAF or an application data analytics enabler server (application data analytics enabler server, ADAES), or may obtain the foregoing information from another entity that has a data analysis function and a data prediction function. The ADAES is an application layer function entity, and may collect computational performance and transmission performance data corresponding to the EAS from a 5G network, a network management system, an operation administration and maintenance (operation administration and maintenance, OAM), an EAS server, a service enabler architecture layer data delivery (service enabler architecture layer data delivery, SEALDD) server, an AC, a SEALDD client, and the like, and perform analysis and derivation based on the collected data, to obtain corresponding prediction information. The NWDAF is a function entity in the 5G core network, and also has a capability of collecting computational performance and transmission performance data corresponding to the EAS and performing prediction.

Optionally, the NWDAF and/or the ADAES may actively send statistics information and/or prediction information of computational performance of an EAS registered on the first entity to the first entity; or the NWDAF and/or the ADAES may send, based on a subscription request of the first entity, statistics information and/or prediction information of computational performance of an EAS which the first entity requests to subscribe to the first entity. Alternatively, after receiving the first request, the first entity may determine a candidate first EAS that may become the first EAS, and request the NWDAF and/or the ADAES to obtain statistics information and/or prediction information of computational performance of the candidate first EAS. The NWDAF and/or the ADAES sends the statistics information and/or the prediction information of the computational performance of the candidate first EAS to the first entity based on the request of the first entity.

### (2) Statistics information and/or prediction information of transmission performance of the at least one EAS.

The first entity may obtain the statistics information and/or the prediction information of the transmission performance of the at least one EAS. The statistics information of the transmission performance may include transmission resources currently used by a part or all of the at least one EAS, current transmission performance parameters, and the like, for example, EAS QoS statistics information, EAS delay statistics information, and EAS packet loss rate statistics information. The prediction information of the transmission performance may include a transmission resource usage status, a predicted transmission performance parameter, and the like that are predicted for a part or all of the at least one EAS, for example, EAS QoS prediction information, EAS delay prediction information, and EAS packet loss rate prediction information.

Optionally, the first entity may obtain the foregoing information (2) from an NWDAF or an ADAES, or may obtain the foregoing information from another entity that has a data analysis function and a data prediction function.

Optionally, the NWDAF and/or the ADAES may actively send statistics information and/or prediction information of transmission performance of an EAS registered on the first entity to the first entity; or the NWDAF and/or the ADAES may send, based on a subscription request of the first entity, statistics information and/or prediction information of transmission performance of an EAS which the first entity requests to subscribe to the first entity. Alternatively, after receiving the first request, the first entity may determine a candidate first EAS that may become the first EAS, and request the NWDAF and/or the ADAES to obtain statistics information and/or prediction information of computational performance of the candidate first EAS. The NWDAF and/or the ADAES sends the statistics information and/or the prediction information of the computational performance of the candidate first EAS to the first entity based on the request of the first entity.

### (3) Available computational performance information of the at least one EAS.

The first entity may obtain the available computational performance information of the at least one EAS. The computational performance information may include one or more pieces of the following information: an EAS identifier, EAS address information, an EAS available compute resource (a maximum compute resource allocated to the EAS), an EAS expandable compute resource, time required for expanding the EAS, and time required for instantiating the EAS.

An instantiated EAS has address information, and an EAS that is instantiable but not instantiated yet does not have address information.

Optionally, the first entity may obtain the foregoing information (3) from the second entity.

### (4) Available transmission performance information of the at least one EAS.

The first entity may obtain the available transmission performance information of the at least one EAS. The transmission performance information may include one or more pieces of the following information: an EAS identifier, EAS address information, and an EAS available transmission resource (a maximum transmission resource allocated to the EAS).

An instantiated EAS has address information, and an EAS that is instantiable but not instantiated yet does not have address information.

Optionally, the first entity may obtain the foregoing information (4) from the second entity.

After obtaining one or more pieces of the foregoing information (1) to information (4), the first entity may determine, based on the obtained information and the application requirement, whether to request to perform compute resource expansion on the instantiated first EAS or request to perform instantiation on the first EAS that is instantiable but not instantiated yet, to trigger execution of step 702a and/or step 702b; or may determine, based on the obtained information and the application requirement, whether to perform transmission performance optimization, that is, configure a transmission resource, on the instantiated first EAS. For example, the first entity may determine, based on statistics information and prediction information of computational performance of an instantiated EAS, whether the instantiated EAS can meet the application requirement; may determine, based on the available computational performance information of the at least one EAS, an upper bound of the computational performance required by the EAS; may determine, based on the available transmission performance information of the at least one EAS, an upper bound of transmission performance required by the EAS; and determine a possible range of the computational performance required by the EAS based on the statistics information and/or the prediction information of the computational performance of the EAS; and determine a possible range of the transmission performance required by the EAS based on the statistics information and/or the prediction information of the transmission performance of the EAS. The first entity may jointly use the determined various types of information to determine the transmission performance and the computational performance required by the EAS.

In addition, the first entity may further determine, based on EAS expansion time and EAS instantiation time, whether to request to perform compute resource expansion on the instantiated EAS or request to perform instantiation on the instantiable EAS. For example, if the expansion time is short, the first entity may request to perform compute resource expansion on the instantiated EAS.

In a possible design, a process in which the first entity determines, based on the application requirement, the computational performance and the transmission performance required by the first EAS, and sends the second request and/or the third request, that is, step 702a and step 702b, may be performed in an EAS discovery procedure initiated by the EEC in the terminal device, or may be performed after the EAS discovery procedure. The following separately uses examples for description.

Case 1: Step 702a and/or step 702b are/is performed in an EAS discovery procedure initiated by the EEC in the terminal device.

After receiving the first request sent by the EEC, the first entity determines, based on the application requirement, the computational performance and the transmission performance required by the first EAS, and requests to perform compute resource expansion on the instantiated first EAS, or requests to perform instantiation on the first EAS that is instantiable but not instantiated yet, or requests to obtain a first EAS whose computational performance is required. Further, the first entity may request to configure a transmission resource for the first EAS, and then send the information about the first EAS to the EEC by using the first response.

In Case 1, the first response sent by the first entity in step 703 is a response to the first request.

Case 2: Step 702a and/or step 702b are/is performed after the EAS discovery procedure initiated by the EEC in the terminal device.

After receiving the first request sent by the EEC, the first entity may first return a response message to the EEC. The response message carries the identifier of the instantiated EAS and/or the address information of the instantiated EAS, and may further carry an identifier of an instantiable EAS. After receiving the response message, the EEC sends a fourth request to the first entity, where the fourth request includes an identifier of the second EAS, and is for requesting to confirm whether the second EAS can be selected to provide a service for the terminal device, or request to connect to the second EAS. After receiving the fourth request, the first entity determines whether the second EAS has the computational performance and the transmission performance required by the application. If the second EAS has the computational performance and the transmission performance required by the application, the first entity determines that the second EAS can be selected to provide a service for the terminal device; or if the second EAS does not have the computational performance and the transmission performance required by the application, step 702a and/or step 702b is performed.

In Case 2, the first response sent by the first entity in step 703 is a response to the fourth request. The first entity sends, to the EEC, information about the determined first EAS that can meet requirements of the application on the computational performance and the transmission performance.

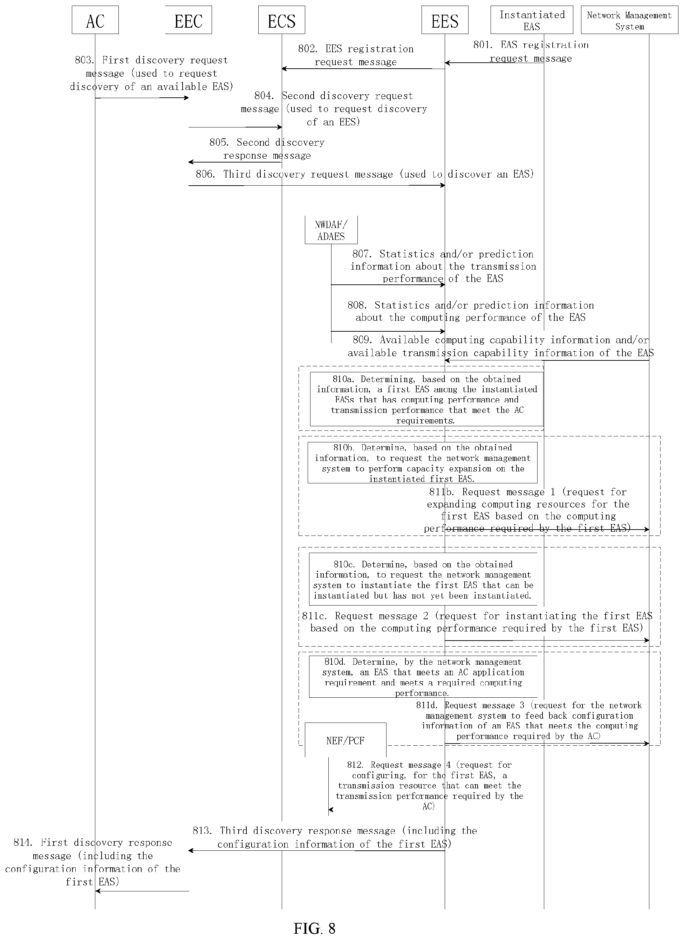

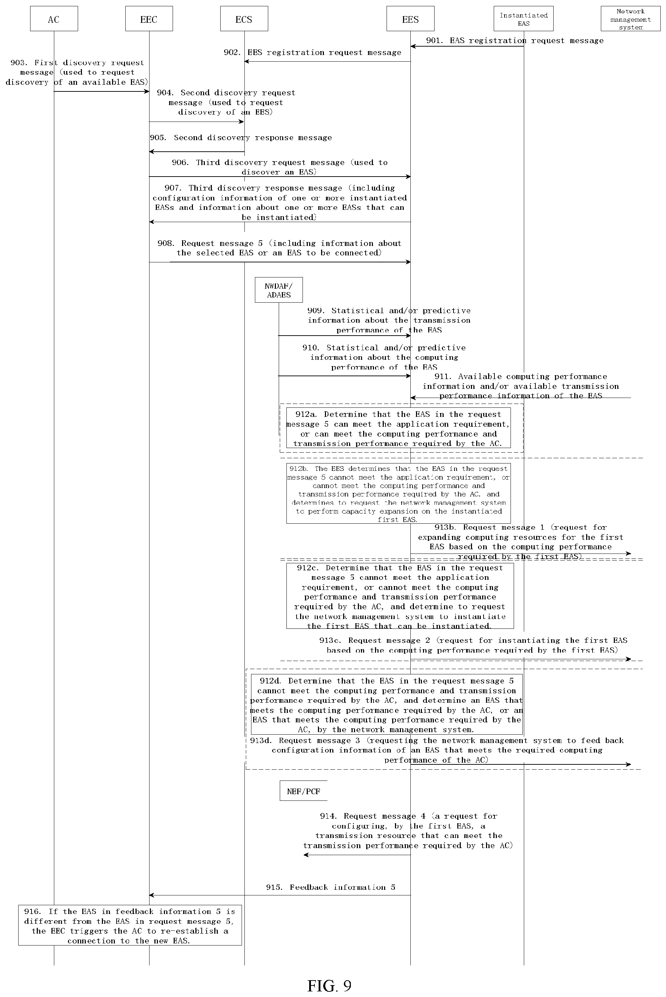

To better understand the foregoing embodiments of this application, the following provides examples with reference to FIG. 8 and FIG. 9.

In a schematic flowchart of a method for discovering an EAS shown in FIG. 8, a process of performing compute resource expansion on an instantiated EAS, performing instantiation on an instantiable EAS, and/or configuring a transmission resource for the EAS is performed in an EAS discovery procedure initiated by an EEC, and corresponds to the foregoing Case 1.

Specifically, the procedure may include the following steps.

Step 801: The instantiated EAS sends an EAS registration request message to an EES.

The EAS registration request message may include EAS configuration information (EAS profile). The EAS configuration information may include an EAS identifier, EAS address information (that is, EAS endpoint (endpoint) information), performance (that is, an EAS service key performance indicator (EAS service KPI), such as computational performance and storage performance) that can be provided by the EAS, and the like.

Optionally, the EES sends an EAS registration response message to the EAS, to indicate whether the registration succeeds.

It should be understood that, FIG. 8 provides an example of a registration step of the EAS. However, there may be a plurality of EASs registered with the EES, and registration processes of the EASs are similar. Therefore, the registration process is not shown in the figure. Although the plurality of EASs of a same application have a same EAS identifier, the EASs may be registered in the EES respectively. After the same EAS is released and re-instantiated, it may be registered again.

Step 802: The EES sends an EES registration request message to the ECS.

The EES registration request message may include EES configuration information (EES profile). The EES configuration information may include an EES identifier, EES address information (that is, an EES endpoint), an EAS identifier registered with the EES.

Optionally, the ECS may send an EES registration response message to the EES, to indicate whether the registration succeeds.

The execution sequence of step 801 and step 802 is not limited. The EES may be registered with the ECS first, and then the EAS is registered with the EES. The EES registers the EAS after ECS is registered, and the EES may update the registered EAS information to the ECS.

Step 803: An AC sends a first discovery request message to the EEC.

When an AC running on the terminal device has a service requirement, the AC may send the first discovery request message to the EEC running on the terminal device, where the first discovery request message is for requesting to discover an available EAS, to implement a connection to the EAS and exchange service data.

The first discovery request message may include AC configuration information (AC profile). The AC configuration information may include an AC identifier, an EAS identifier required by the AC, EAS performance (that is, an AC service KPI) required by the AC, and the like.

Step 804: The EEC sends a second discovery request message to the ECS.

The second discovery request message is for requesting to discover the EES. For example, the second discovery request message may be a service provisioning request. The second discovery request message may include an EEC identifier, location information of the terminal device, the AC profile, and the like.

Step 805: The ECS sends a second discovery response message to the EEC.

The second discovery response message is a response message for the second discovery request message, and the second discovery response message may include the EES identifier, EES address information, and the like.

Step 806: The EEC sends a third discovery request message to the EES.

The third discovery request message is for discovering the EAS, and is an implementation of the first request in the embodiment shown in FIG. 7. For example, the third discovery request message may be an EAS discovery request. The third discovery request message may include the EEC identifier, an EAS discovery filter (EAS discovery filter), and the like.

In a specific example, the third discovery request message may include the information described in Table 1.

**Table 1**

| Information element | Description |
|---|---|
| Requester identifier | Indicates an identifier of a requester (for example, an EEC ID) |
| UE identifier | Indicates an identifier of UE (for example, GPSI or an identity token) |
| Security credential | Indicates a security credential resulting from successful authorization for an edge computing service |
| EAS discovery filter | Indicates a set of characteristics for determining a needed EAS |

In a specific example, the EAS discovery filter may include information elements shown in Table 2.

**Table 2**

| Information element | | Description |
|---|---|---|
| List of AC characteristics | | Describes an AC for which a matching EAS is needed |
| | > AC profile | Includes AC configuration information including parameters for determining a matching EAS |
| List of EAS characteristics | | Describes characteristics of the needed edge application server EAS |
| | > EAS ID | Indicates a needed EAS identifier |
| | > EAS provider identifier | Indicates a needed EAS provider identifier |
| | > EAS type | Indicates a category or type (for example, V2X) of the needed EAS |
| | > EAS schedule (EAS schedule) | Indicates availability schedule (for example, a time window) required by the EAS |
| | > EAS geographical service area | Indicates a location (for example, a geographical area and a route) in which an EAS service is available |
| | > EAS topological service area | Indicates a topology area (for example, cell ID and tracking area identity (TAI)) in which an EAS service of the cell is available |
| | > Service continuity support | Indicates whether the service continuity support is needed |
| | > EAS status | Indicates a status (for example, enabled or disabled) of the EAS |
| | > Service permission level | Indicates a needed service permission level |
| | > Service characteristics | Indicates a needed service function, for example, a single-player and multi-player gaming service |

Step 807: The EES obtains statistics information and/or prediction information of transmission performance of the EAS from an NWDAF/an ADAES.

Optionally, a process of obtaining the foregoing information by the EES may be as follows: The EES first sends, to the NWDAF/the ADAES, a transmission performance obtaining request message, and after receiving the transmission performance obtaining request, the NWDAF/ADAES sends, to the EES, the statistics information and/or the prediction information of the transmission performance of the EAS.

An execution sequence of step 807 is not limited in this embodiment of this application. The EES may perform step 807 after receiving the third discovery request message sent by the EEC. In this case, the transmission performance obtaining request message sent by the EES may include the EAS identifier (that is, the EAS ID in Table 1) and/or the EAS address information required by the EEC. Alternatively, the EES may perform step 807 before receiving the third discovery request message sent by the EEC. For example, the EES may obtain the statistics information and/or the prediction information of the transmission performance of the EAS from the NWDAF/the ADAES, to subsequently perform a discovery procedure of the EAS. In this case, the statistics information and/or the prediction information of the transmission performance of the plurality of EASs may be obtained by the EES.

Step 808: The EES obtains statistics information and/or prediction information of computational performance of the EAS from the NWDAF/the ADAES.

Optionally, a process of obtaining the foregoing information by the EES may be as follows: The EES first sends, to the NWDAF/the ADAES, a computational performance obtaining request message, and after receiving the computational performance obtaining request, the NWDAF/ADAES sends, to the EES, the statistics information and/or the prediction information of the computational performance of the EAS.

An execution sequence of step 808 is not limited in this embodiment of this application. The EES may perform step 808 after receiving the third discovery request message sent by the EEC. In this case, the computational performance obtaining request message sent by the EES may include the EAS identifier (that is, the EAS ID in Table 1) and/or the EAS address information required by the EEC. Alternatively, the EES may perform step 808 before receiving the third discovery request message sent by the EEC. For example, the EES may obtain the statistics information and/or the prediction information of the computational performance of the EAS from the NWDAF/the ADAES, to subsequently perform the discovery procedure of the EAS. In this case, the statistics information and/or the prediction information of the computational performance of the plurality of EASs may be obtained by the EES. It should be understood that, a sequence of step 808 and step 807 is not limited either.

Step 809: The EES obtains available computational performance information and/or available transmission performance information of the EAS from a network management system.

Optionally, the process of obtaining the information by the EES may be as follows: The EES sends a performance information obtaining request message to the network management system, and after receiving the performance information obtaining request message, the network management system sends availability computing information and/or the available transmission performance information of the EAS to the EES.

An execution sequence of step 809 is not limited in this embodiment of this application. The EES may perform step 808 after receiving the third discovery request message sent by the EEC. In this case, the performance information obtaining request message sent by the EES may include the EAS identifier, that is, the EAS ID in Table 1, and/or the EAS address information (the EAS address information maybe determined by the EES based on the EAS identifier). Alternatively, the EES may perform step 809 before receiving the third discovery request message sent by the EEC. For example, the EES may obtain the available computational performance information and/or the available transmission performance information of the EAS from the network management system, to subsequently perform the discovery procedure of the EAS. In this case, the available computational performance information and/or the available transmission performance information of the plurality of EASs may be obtained by the EES. It should be understood that, a sequence of step 809, step 807 and step 808 is not limited either.

After the EES obtains the statistics information and/or the prediction information of the transmission performance of the EAS, the statistics information and/or the prediction information of the computational performance of the EAS, and the available computational performance information and/or the available transmission performance information of the EAS, and receives the third discovery request message sent by the EEC, the method procedure enters step 810a, enters step 810b and step 811b, enters step 810c and step 811c, or enters step 810d and step 811d.

Step 810a: The EES determines, based on the obtained information, that a first EAS that meets computational performance and transmission performance required by an AC exists in the instantiated EAS.

When the EAS that meets an AC application requirement EAS or that meets the computational performance and the transmission performance required by the AC exists in the instantiated EAS, the EES may determine any one of the EAS that meets the AC application requirement EAS or the EAS that meets the computational performance and the transmission performance required by the AC as the first EAS, to provide a service for the AC, or the EES may select an EAS as the first EAS according to a configured policy, to provide a service for the AC.

Step 810b: The EES determines, based on the obtained information, to request the network management system to perform expansion on an instantiated first EAS.

Step 811b: The EES sends a request message 1 to the network management system.

The request message 1 may include an identifier of the first EAS, address information of the first EAS, and computational performance required by the first EAS. Optionally, the request message 1 may further include expansion indication information which indicating that compute resource expansion is requested to be performed on the first EAS based on the computational performance required by the first EAS.

The network management system performs compute resource expansion on the first EAS based on the request message 1. Optionally, after the expansion, feedback information 1 may be sent to the EES, to indicate whether the expansion succeeds. An example in which the expansion succeeds is used herein for description. If the expanded succeeds and the configuration information of the EAS changes, the feedback information 1 may also include the changed configuration information of the EAS.

Step 810c: The EES determines, based on the obtained information, to request the network management system to perform instantiation on a first EAS that is instantiable but not instantiated yet.

Step 811c: The EES sends a request message 2 to the network management system.

The request message 2 may include an identifier of the first EAS, computational performance required by the first EAS and/or instantiation indication information which indicating that instantiation is requested to be performed on the first EAS based on the computational performance required by the first EAS.

After receiving the request message 2, the network management system may first determine whether the instantiation can be performed on the first EAS, and if the instantiation can be performed, an instantiation operation is performed. Optionally, after the instantiation, the network management system may send feedback information 2 to the EES, to indicate whether the instantiation succeeds. An example in which the instantiation succeeds is used herein for description. The feedback information 2 may further include configuration information of an instantiated first EAS.

Step 810d: The EES determines an EAS that meets an AC application requirement and meets required computational performance and that is determined the network management system.

Step 811d: The EES sends a request message 3 to the network management system.

The request message 3 is for requesting the network management system to feed back the configuration information of the EAS that meets the computational performance required by the AC. The request message 3 may include the EAS identifier and computational performance required by the EAS.

After receiving the request message 3, the network management system determines whether to perform compute resource expansion on the instantiated EAS to obtain the first EAS that meets the computational performance required by the AC, or perform instantiation on an EAS that is instantiable but not instantiated yet, to obtain the first EAS that meets the computational performance required by the AC. After performing a compute resource expansion operation or an instantiation operation, the network management system sends feedback information 3 to the EES, where the feedback information 3 includes configuration information of the first EAS.

Step 812: The EES sends a request message 4 to a NEF/a PCF.

The EES sends the request message 4 to the NEF or the PCF, where the request message 4 includes the identifier of the first EAS (and/or the address information of the first EAS) and the transmission performance required by the AC (for example, required QoS, that is, QoS requirement(s)), to request to configure, for the first EAS, a transmission resource that can meet the transmission performance required by the AC.

In a specific embodiment shown in FIG. 8, computational performance is optimized (including compute resource expansion on the instantiated EAS or EAS instantiation) and transmission is also optimized (for example, requesting to configure a transmission resource that meets transmission performance for the instantiated EAS). It should be understood that, in actual application, only the computational performance may be optimized, or only the transmission performance may be optimized. That is, the EES may perform step 810b, step 811b, and step 812; may perform step 810c, step 811c, and step 812; may perform step 810d, step 811d, and step 812; may perform step 810b and step 811b and not perform step 812; may perform step 810c and step 811c but not perform step 812; may perform step 810d and step 811d and not perform step 812; or may only perform step 812 and not perform step 810 (b to d) and step 811 (b to d).

Step 813: The EES sends a third discovery response message to the EEC.

The third discovery response message is a response message for the third discovery request message, and the third discovery response message may include the configuration information (EAS profile) of the first EAS.

In a specific example, the third discovery response message may include the information described in Table 3.

**Table 3**

| | | Information element | Description |
|---|---|---|---|
| Successful response | | | Indicates that an EAS discovery request is successful |
| | Indicates a list of discovered EASs | | Indicates the list of the discovered EASs |
| | | EAS profile | Indicates the EAS profile |
| | | Lifecycle | Indicates a time interval or duration (for example, a time to live value for an EAS endpoint) during which an information element in an EAS configuration file is valid and supposed to be cached in the EEC |
| Failure response | | | Indicates that the EAS discovery request fails |
| | Reason | | Indicates a cause of an EAS discovery request failure |

Step 814: The EEC sends a first discovery response message to the AC.

The first discovery response message is a response message for the first discovery request message, and the first discovery response message may include the configuration information of the first EAS.

In a schematic flowchart of a method for discovering an EAS shown in FIG. 9, a process of performing compute resource expansion on an instantiated EAS or performing instantiation on an instantiable EAS is performed after an EAS discovery procedure initiated by an EEC, and corresponds to the foregoing Case 2.

Specifically, the procedure may include the following steps.

Step 901 to step 906 are similar to step 801 to step 806 in the foregoing embodiment. Details are not described herein again.

Step 907: An EES sends a third discovery response message to the EEC.

The third discovery response message is a response message for a third discovery request message.

The third discovery response message may include any one or more pieces of configuration information of one or more instantiated EASs and information about one or more instantiable EASs (that is, an identifier of an instantiable EAS).

Step 908: The EEC sends a request message 5 to the EES.

After an AC or the EEC selects, based on the configuration information of the instantiated EAS and/or the information about the instantiable EAS that are/is carried in the third discovery response message, an EAS providing a service for the AC, or selects an EAS that needs to be connected, the EEC sends the request message 5 to the EES, where the request message 5 includes information about the selected EAS or the EAS that needs to be connected.

When the EAS selected by the AC or the EEC is an instantiated EAS, the information about the EAS included in the request message 5 may include an EAS identifier and EAS address information. If the EAS selected by the AC or the EEC is an instantiable EAS, the information about the EAS included in the request message 5 may include the EAS identifier.

Step 909 to step 911 are similar to step 807 to step 809 in the foregoing embodiment. Details are not described herein again.

After the EES obtains statistics information and/or prediction information of transmission performance of the EAS, statistics information and/or prediction information of computational performance of the EAS, and available computational performance information and/or available transmission performance information of the EAS, and receives the request message 5 sent by the EEC, the method procedure enters step 912a, enters step 912b, step 913b, and step 914, enters step 912c, step 913c, and step 914 or enters step 912d, step 913d, and step 914.

Step 912a: The EES determines whether the EAS in the request message 5 can meet an application requirement, or meet computational performance and transmission performance required by the AC.

When the EES determines that the EAS in the request message 5 can meet the computational performance and the transmission performance required by the AC, the EES may directly enters step 915.

Step 912b: The EES determines that the EAS in the request message 5 cannot meet an application requirement, or cannot meet computational performance and transmission performance required by the AC, and determines to request the network management system to perform expansion on an instantiated first EAS.

Step 912c: The EES determines that the EAS in the request message 5 cannot meet an application requirement, or cannot meet computational performance and transmission performance required by the AC, and determines to request the network management system to perform instantiation on an instantiable first EAS.

Step 912d: The EES determines that the EAS in the request message 5 cannot meet computational performance and transmission performance required by the AC, and determines that the network management system determines the EAS that meets the computational performance required by the AC.

Step 913b, step 913c, step 913d, and step 914 are similar to step 811b, step 811c, step 811d, and step 812 in the foregoing embodiment. Details are not described herein again.

Step 915: The EES sends feedback information 5 to the EEC.

When the EES enters step 915 from step 912a, the feedback information 5 may indicate that the determination succeeds, and carry configuration information of the EAS selected by the AC or the EEC.

In another case, the feedback information 5 includes the configuration information of an expanded first EAS or the configuration information of the instantiated first EAS.

Step 916: If the EAS in the feedback information 5 is different from the EAS in the request message 5, the EEC triggers the AC to reconnect to a new EAS.

Embodiments of this application may be further applied to an application context relocation (application context relocation, ACR) scenario (S-EAS decided ACR scenario or S-EES executed ACR scenario). For example, when mobility of a terminal device changes, or an EAS load manner changes, an entity that provides a discovery service for the terminal device needs to be switched. In this case, the switched entity that is configured to provide the discovery service for the terminal device should also discover an available EAS for the terminal device based on computational performance and transmission performance required by an application. In this case, the first entity in the foregoing method embodiment may be the entity that provides the discovery service for the terminal device after the switching, that is, a target first entity.

Specifically, when a source EAS or a source first entity detects that the target first entity needs to provide the discovery service for the terminal device and/or the target EAS needs to provide a service for the terminal device because the location information of the terminal device changes or the load of the EAS changes, the source first entity may send a first request to the target first entity, to request the target first entity to provide configuration information of an EAS that can meet an application requirement. The target first entity determines, based on the application requirement, computational performance and transmission performance required by the first EAS (that is, a target EAS), and sends a second request (the second request includes the computational performance required by the first EAS) to a second entity, and/or sends a third request (the third request includes the transmission performance required by the first EAS) to a third entity, to implement compute resource expansion of the instantiated first EAS or perform instantiation of the instantiable first EAS, then, the configuration information of the first EAS is sent to the source first entity by using a first response. Then, the source first entity sends the configuration information of the first EAS to the EEC running on the terminal device.

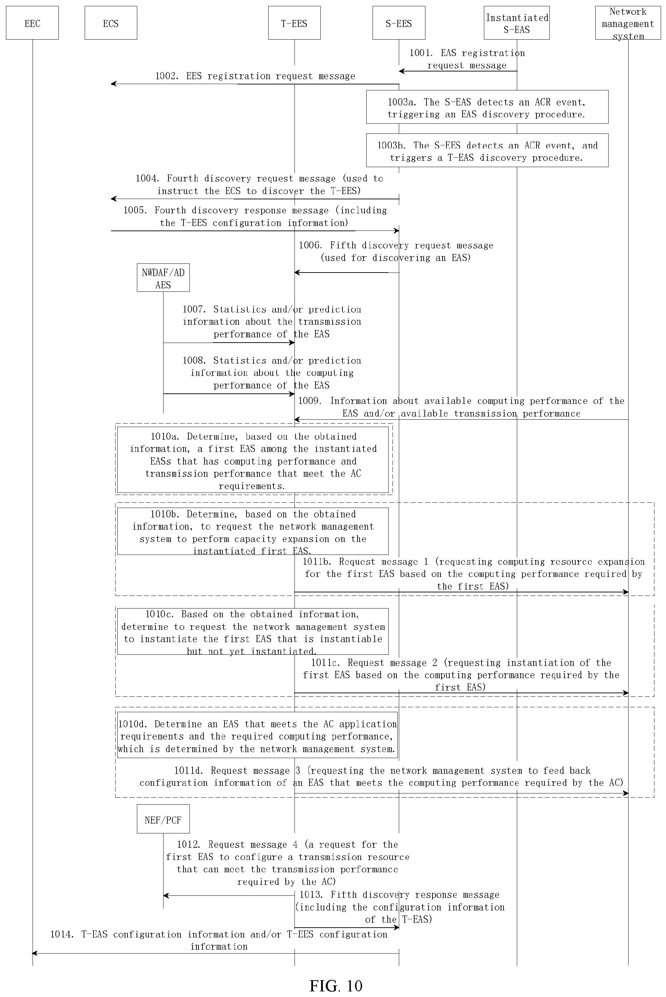

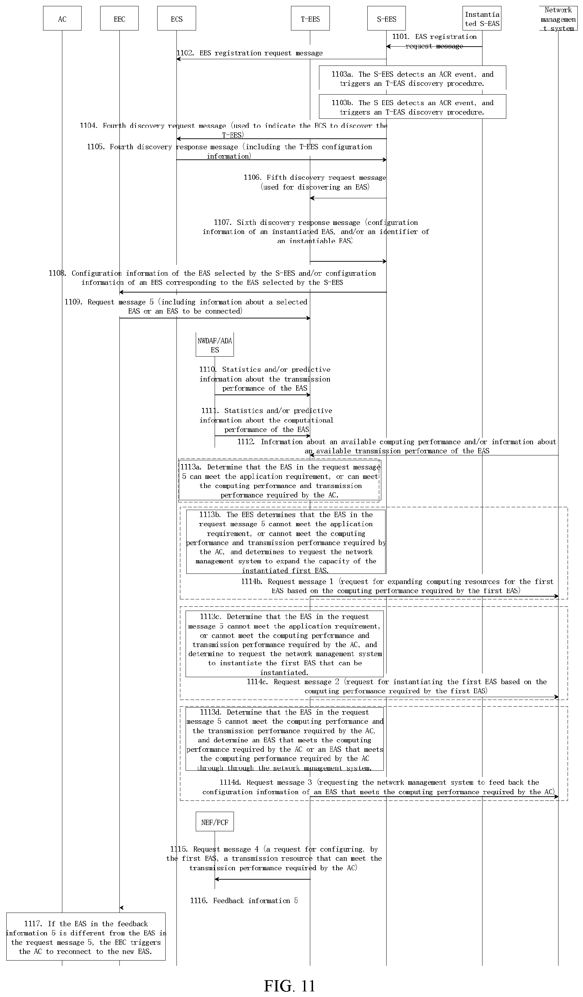

To better understand the foregoing solution, the following provides examples with reference to FIG. 10 and FIG. 11.

In a schematic flowchart of a method for discovering an EAS shown in FIG. 10, Case 1 (a process of performing compute resource expansion on an instantiated EAS or performing instantiation on an instantiable EAS, and/or a process of requesting to configure a transmission resource for the EAS are/is performed in an EAS discovery procedure initiated by an EEC) is applied in an ACR scenario. An S-EES is a source first entity, a T-EES is a target first entity, an S-EAS is a source EAS, and a T-EAS is a target EAS.

Specifically, the procedure may include the following steps.

Step 1001 to step 1002 are similar to step 801 to step 802 in the foregoing embodiment. Details are not described herein again.

Step 1003a and step 1003b are respectively triggered by different subjects to trigger a T-EAS discovery procedure. In actual application, either of the two steps may be selected for execution.

Step 1003a: The S-EAS detects an ACR event, and triggers the T-EAS discovery procedure.

When the S-EAS detects that location information of a terminal device changes and exceeds coverage of the S-EAS, or detects that the S-EAS is overloaded and a service needs to be provided for the terminal device by another EAS, the S-EAS may trigger the T-EAS discovery procedure.

Step 1003b: The S-EES detects the ACR event, and triggers the T-EAS discovery procedure.

The EEC, the S-EES, or the S-EAS detects the ACR event and notifies the S-EES. Then, the S-EES triggers the T-EAS discovery process.

Step 1004: The S-EES sends a fourth discovery request message to an ECS.

The fourth discovery request indicates the ECS to discover the T-EES, and the fourth discovery request message may include an S-EES identifier, a needed EAS identifier, and the like.

Step 1005: The ECS sends a fourth discovery response message to the S-EES.

The fourth discovery response message is a response message for the fourth discovery request message, and the fourth discovery response message may include T-EES configuration information (a T-EES identifier, T-EES address information, and the like).

Step 1006: The S-EES sends a fifth discovery request message to the T-EES.

The fifth discovery request message is for discovering the EAS, that is, the first request in the embodiment shown in FIG. 7. The fifth discovery request message may include an EEC identifier, an EAS discovery filter, and the like.

Step 1007 to step 1012 are similar to step 807 to step 812 in the foregoing embodiment. A difference lies in that an execution body involved in step 1007 to step 1012 is the T-EES.

Step 1013: The T-EES sends a fifth discovery response message to the S-EES.

The fifth discovery response message is a response message for a fifth discovery request message, that is, the first response in the embodiment shown in FIG. 7. The fifth discovery response message may include configuration information of the T-EAS (T-EAS profile).

Step 1014: The S-EES sends the configuration information of the T-EAS and/or configuration information of the T-EES to the EEC.

The EEC may trigger, based on the configuration information of the T-EAS and/or the configuration information of the T-EES, an AC to connect to the T-EAS.

In a schematic flowchart of a method for discovering an EAS shown in FIG. 11, Case 2 (a process of performing compute resource expansion on an instantiated EAS or performing instantiation on an instantiable EAS, and/or a process of requesting to configure a transmission resource for the EAS are/is performed after an EAS discovery procedure initiated by an EEC) is applied in an ACR scenario. An S-EES is a source first entity, a T-EES is a target first entity, an S-EAS is a source EAS, and a T-EAS is a target EAS.

Specifically, the procedure may include the following steps.

Step 1101 to step 1106 are similar to step 1001 to step 1006 in the foregoing embodiment. Details are not described herein again.

Step 1107: The T-EES sends a sixth discovery response message to the S-EES.

The sixth discovery response message is a response message for a fifth discovery request message. The sixth discovery response message may include configuration information of an instantiable EAS and/or an identifier of an instantiated EAS.

Step 1108: The S-EES sends, to the EEC, configuration information of an EAS selected by the S-EES and/or configuration information of an EES corresponding to an EAS selected by the S-EES.

Step 1109 to step 1117 are similar to step 908 to step 916 in the foregoing embodiment. A difference lies in that an EES involved in step 1109 to step 1117 is the T-EES.

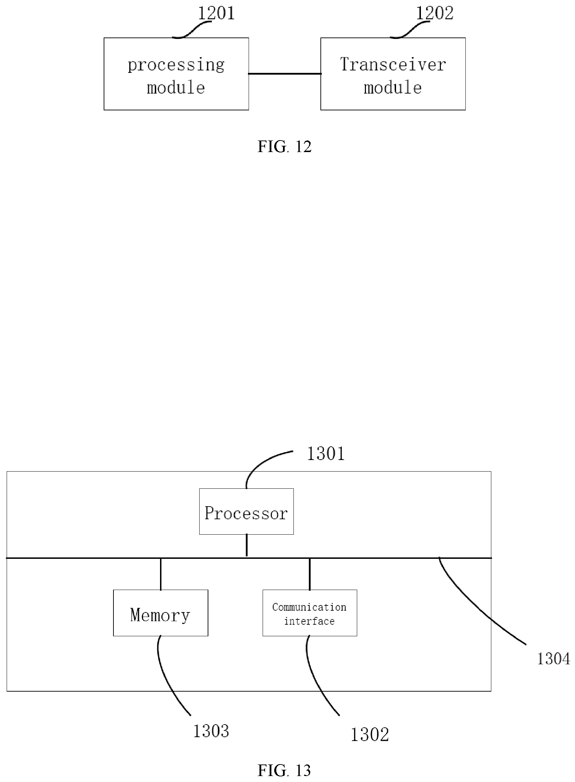

FIG. 12 is a diagram of a communication apparatus according to an embodiment of this application. The communication apparatus includes a processing module 1201 and a transceiver module 1202. The processing module 1201 is configured to implement data processing by the communication apparatus. The transceiver module 1202 is configured to receive content between the communication apparatus and another unit or network element, or send the content between the communication apparatus and the another unit or the network element. It may be understood that, the processing module 1201 in this embodiment of this application may be implemented by a processor or a processor-related circuit component (or referred to as a processing circuit), and the transceiver module 1202 may be implemented by a receiver/a transceiver or a receiver/transceiver-related circuit component.

For example, the communication apparatus may be a communication apparatus device, or may be a chip used in the communication apparatus device or another combined device or component with a function of the communication apparatus device.

When the communication apparatus is a first entity, the processing module 1201 receives a first request through the transceiver module 1202, where the first request is for requesting to obtain information about an EAS that meets an application requirement; sends a second request to a second entity through the transceiver module 1202, where the second request includes computational performance required by a first EAS that is determined based on the application requirement; and/or sends a third request to a third entity through the transceiver module 1202, where the third request includes transmission performance required by the first EAS that is determined based on the application requirement; and sends a first response through the transceiver module 1202, where the first response includes the information about the first EAS. A state of the first EAS is an instantiated state, or is a state of being instantiable but not instantiated yet.

In addition, the foregoing modules may be further configured to support another process performed by the first entity in embodiments shown in FIG. 7 to FIG. 11. For beneficial effects, refer to the foregoing descriptions. Details are not described herein again.

When the communication apparatus is a second entity, the processing module 1201 receives, through the transceiver module 1202, a second request sent by a first entity, where the second request includes computational performance required by a first EAS; performing compute resource expansion or instantiation on the first EAS based on the second request, so that computational performance of the expanded or instantiated first EAS meets the computational performance required by the first EAS; and sends, through the transceiver module 1202, information about the first EAS to the first entity.

In addition, the foregoing modules may be further configured to support another process performed by the second entity in embodiments shown in FIG. 7 to FIG. 11. For beneficial effects, refer to the foregoing descriptions. Details are not described herein again.

When the communication apparatus is a third entity, the processing module 1201 receives, through the transceiver module 1202, a third request sent by a first entity, where the third request includes transmission performance required by a first EAS; and configures a transmission resource for the first EAS based on the transmission performance.

In addition, the foregoing modules may be further configured to support another process performed by the third entity in embodiments shown in FIG. 7 to FIG. 11. For beneficial effects, refer to the foregoing descriptions. Details are not described herein again.

When the communication apparatus is a fourth entity, the processing module 1201 sends, through the transceiver module 1202, one or more pieces of the following information to the first network element: statistics information of computational performance of at least one EAS, prediction information of computational performance of at least one EAS, statistics information of transmission performance of at least one EAS, and prediction information of transmission performance of at least one EAS.

In addition, the foregoing modules may be further configured to support another process performed by the fourth entity in embodiments shown in FIG. 7 to FIG. 11. For beneficial effects, refer to the foregoing descriptions. Details are not described herein again.

FIG. 13 is a diagram of another communication apparatus according to an embodiment of this application. The communication apparatus includes a processor 1301 and a communication interface 1302, and may further include a memory 1303 and a bus 1304. The processor 1301, the communication interface 1302, and the memory 1303 may be connected to each other through a bus 1304. The bus 1304 may be a peripheral component interconnect (peripheral component interconnect, PCI) bus, an extended industry standard architecture (extended industry standard architecture, EISA) bus, or the like. The foregoing bus 1304 may be classified into an address bus, a data bus, a control bus, and the like. For ease of representation, the bus is represented by using only one line in FIG. 13. However, it does not mean that there is only one bus or only one type of bus.

The processor 1301 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (Generic Array Logic, GAL), or any combination thereof. The memory 1303 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 1301 is configured to implement a data processing operation of the communication apparatus. The communication interface 1302 is configured to implement a receiving operation and a sending operation of the communication apparatus.

When the communication apparatus is a first entity, the processor 1301 receives a first request through the communication interface 1302, where the first request is for requesting to obtain information about an EAS that meets an application requirement; sends a second request to a second entity through the communication interface 1302, where the second request includes computational performance required by a first EAS that is determined based on the application requirement; and/or sends a third request to a third entity through the communication interface 1302, where the third request includes transmission performance required by the first EAS that is determined based on the application requirement; and sends a first response through the communication interface 1302, where the first response includes the information about the first EAS. A state of the first EAS is an instantiated state, or is a state of being instantiable but not instantiated yet.

In addition, the foregoing components may be further configured to support another process performed by the first entity in embodiments shown in FIG. 7 to FIG. 11. For beneficial effects, refer to the foregoing descriptions. Details are not described herein again.

When the communication apparatus is a second entity, the processor 1301 receives, through the communication interface 1302, a second request sent by a first entity, where the second request includes computational performance required by a first EAS; performing compute resource expansion or instantiation on the first EAS based on the second request, so that computational performance of the expanded or instantiated first EAS meets the computational performance required by the first EAS; and sends, through the communication interface 1302, information about the first EAS to the first entity.

In addition, the foregoing components may be further configured to support another process performed by the second entity in embodiments shown in FIG. 7 to FIG. 11. For beneficial effects, refer to the foregoing descriptions. Details are not described herein again.

When the communication apparatus is a third entity, the processor 1301 receives, through the communication interface 1302, a third request sent by a first entity, where the third request includes transmission performance required by a first EAS; and configures a transmission resource for the first EAS based on the transmission performance.

In addition, the foregoing components may be further configured to support another process performed by the third entity in embodiments shown in FIG. 7 to FIG. 11. For beneficial effects, refer to the foregoing descriptions. Details are not described herein again.

When the communication apparatus is a fourth entity, the processor 1301 sends, through the communication interface 1302, one or more pieces of the following information to the first network element: statistics information of computational performance of at least one EAS, prediction information of computational performance of at least one EAS, statistics information of transmission performance of at least one EAS, and prediction information of transmission performance of at least one EAS.

In addition, the foregoing components may be further configured to support another process performed by the fourth entity in embodiments shown in FIG. 7 to FIG. 11. For beneficial effects, refer to the foregoing descriptions. Details are not described herein again.

Based on a same technical concept, an embodiment of this application further provides a computer-readable storage medium. The computer-readable storage medium stores computer-readable instructions. When the computer-readable instructions are run on a computer, the method according to any one of the foregoing possible implementations is performed.

An embodiment of this application provides a computer program product including instructions. When the computer program product runs on a computer, the method performed by any node in the foregoing method embodiments is performed.

An embodiment of this application provides a chip, including a processor. The processor is coupled to a memory, the memory is configured to store instructions, and when the instructions are executed by the processor, the chip is caused to implement the method steps performed by any one of the foregoing nodes.

An embodiment of this application provides a communication system. The communication system includes the foregoing first entity, the second entity, the third entity, and the fourth entity.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the base station or the terminal. Certainly, the processor and the storage medium may exist in a base station or a terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for discovering an edge application server EAS, applied to a first entity, wherein the method comprises:
receiving a first request, wherein the first request is for requesting to obtain information about a first EAS that meets an application requirement;
sending a second request to a second entity, wherein the second request comprises computational performance required by the first EAS that is determined based on the application requirement; and/or sending a third request to a third entity, wherein the third request comprises transmission performance required by the first EAS that is determined based on the application requirement, and a state of the first EAS is an instantiated state or is a state of being instantiable but not instantiated yet; and
sending a first response, wherein the first response comprises the information about the first EAS.

2. The method according to claim 1, wherein the second request is for requesting the second entity to perform instantiation on the first EAS based on the computational performance required by the first EAS when the state of the first EAS is the state of being instantiable but not instantiated yet.

3. The method according to claim 1, wherein the second request is for requesting the second entity to perform compute resource expansion on the first EAS based on the computational performance required by the first EAS when the first EAS state is the instantiated state.

4. The method according to any one of claims 1 to 3, wherein the method further comprises:
obtaining one or more pieces of the following information: statistics information and/or prediction information of computational performance of at least one EAS, statistics information and/or prediction information of transmission performance of at least one EAS, available computational performance information of at least one EAS, and available transmission performance information of at least one EAS; and
the sending the second request to the second entity comprises:
sending the second request to the second entity based on the application requirement and the obtained information, wherein the second request is for requesting to perform compute resource expansion on the instantiated first EAS, or the second request is for requesting to perform instantiation on the first EAS that is instantiable but not instantiated yet.

5. The method according to any one of claims 1 to 3, wherein the method further comprises:
obtaining one or more pieces of the following information: statistics information and/or prediction information of computational performance of at least one EAS, statistics information and/or prediction information of transmission performance of at least one EAS, available computational performance information of at least one EAS, and available transmission performance information of at least one EAS; and
the sending the third request to the third entity comprises:
sending the third request to the third entity based on the application requirement and the obtained information, wherein the third request is for requesting to configure, for the first EAS, a transmission resource that meets the application requirement.

6. The method according to claim 4 or 5, wherein the available computational performance information of the EAS comprises one or more pieces of the following information: an EAS identifier, an EAS address, an EAS available compute resource, an EAS expandable compute resource, time required for expanding the EAS, and time required for instantiating the EAS.

7. The method according to any one of claims 4 to 6, wherein the available transmission performance of the EAS comprises one or more pieces of the following information: the EAS identifier, the EAS address, and an EAS available transmission resource.

8. The method according to any one of claims 4 to 7, wherein the statistics information of the computational performance comprises one or more pieces of the following information: EAS load information statistics information, EAS delay statistics information, and EAS packet loss rate statistics information; and/or
the prediction information about the computational performance comprises one or more pieces of the following information: EAS load information prediction information, EAS delay prediction information, and EAS packet loss rate prediction information.

9. The method according to any one of claims 4 to 8, wherein the statistics information of the transmission performance comprises one or more pieces of the following information: EAS quality of service QoS statistics information, EAS delay statistics information, and EAS packet loss rate statistics information; and/or
the prediction information about the transmission performance comprises one or more pieces of the following information: EAS quality of service QoS prediction information, EAS delay prediction information, and EAS packet loss rate prediction information.

10. The method according to claim 1, wherein the second request is for requesting the second entity to determine to perform compute resource expansion or instantiation on the first EAS based on the computational performance required by the first EAS; and
before the sending the first response, the method further comprises:
obtaining the information about the first EAS from the second entity.

11. The method according to any one of claims 1 to 10, wherein after receiving the first request, the method further comprises:
sending a second response, wherein the second response comprises one or more pieces of the following information: an identifier of an instantiated EAS, address information of the instantiated EAS, and an identifier of an instantiable EAS; and
receiving a fourth request, wherein the fourth request comprises an identifier of a second EAS that requests for a connection and/or address information of the second EAS;
the sending the second request to the second entity comprises:
when the second EAS cannot meet the application requirement, sending the second request to the second entity; and/or
the sending the third request to the third entity comprises:
when the second EAS cannot meet the application requirement, sending the third request to the third entity.

12. A method for discovering an edge application server EAS, applied to a second entity, wherein the method comprises:
receiving a second request sent by a first entity, wherein the second request comprises computational performance required by the first EAS;
performing compute resource expansion or instantiation on the first EAS based on the second request, so that computational performance of the expanded or instantiated first EAS meets the computational performance required by the first EAS; and
sending information about the first EAS to the first entity.

13. The method according to claim 12, wherein the second request is for requesting the second entity to perform instantiation on the first EAS that is instantiable but not instantiated yet based on the computational performance required by the first EAS;
the second request is for requesting the second entity to perform compute resource expansion on the instantiated first EAS based on the computational performance required by the first EAS; or
the second request is for requesting the second entity to determine to perform compute resource expansion or instantiation on the first EAS based on the computational performance required by the first EAS.

14. The method according to claim 12 or 13, wherein after receiving the second request sent by the first entity, the method further comprises:
sending, to the first entity, available computational performance information of the at least one EAS and/or available transmission performance information of the at least one EAS.

15. The method according to claim 14, wherein the available computational performance information of the EAS comprises one or more pieces of the following information: an EAS identifier, an EAS address, an EAS available compute resource, an EAS expandable compute resource, time required for expanding the EAS, and time required for instantiating the EAS.

16. The method according to claim 14 or 15, wherein the available transmission performance of the EAS comprises one or more pieces of the following information: the EAS identifier, the EAS address, and an EAS available transmission resource.

17. A method for discovering an edge application server EAS, applied to a third entity, wherein the method comprises:
receiving a third request sent by a first entity, wherein the third request comprises transmission performance required by the first EAS; and
configuring a transmission resource for the first EAS based on the transmission performance.

18. The method according to claim 17, wherein the transmission performance comprises a quality of service QoS requirement.

19. A method for discovering an edge application server EAS, applied to a fourth entity, wherein the method comprises:
sending one or more pieces of the following information items to the first entity: statistics information of computational performance of at least one EAS, prediction information of computational performance of at least one EAS, statistics information of transmission performance of at least one EAS, and prediction information of transmission performance of at least one EAS.

20. The method according to claim 19, wherein the method further comprises:
receiving an obtaining request, wherein the obtaining request comprises an identifier of a first EAS and/or an address of the first EAS; and
the information sent to the first entity comprises one or more pieces of the following information: statistics information of computational performance of the first EAS, prediction information of computational performance of the first EAS, statistics information of transmission performance of the first EAS, prediction information of transmission performance of the first EAS.

21. The method according to claim 19 or 20, wherein the statistics information of the computational performance comprises one or more pieces of the following information: EAS load information statistics information, EAS delay statistics information, and EAS packet loss rate statistics information; and/or
the prediction information about the computational performance comprises one or more pieces of the following information: EAS load information prediction information, EAS delay prediction information, and EAS packet loss rate prediction information.

22. The method according to any one of claims 19 to 21, wherein the statistics information of the transmission performance comprises one or more pieces of the following information: EAS quality of service QoS statistics information, EAS delay statistics information, and EAS packet loss rate statistics information; and/or
the prediction information about the transmission performance comprises one or more pieces of the following information: EAS quality of service QoS prediction information, EAS delay prediction information, and EAS packet loss rate prediction information.

23. A communication apparatus, comprising a processing module and a communication module, wherein the processing module is configured to receive and send a message through the communication module, to perform the method according to any one of claims 1 to 22.

24. A communication apparatus, comprising a processor, wherein the processor is coupled to a memory, the memory is configured to store a program or instructions, and when the program or the instructions are executed by the processor, the device is caused to perform the method according to any one of claims 1 to 22.

25. A computer-readable storage medium, wherein the computer-readable storage medium stores instructions, and when the instructions are run on a computer, the computer is caused to perform the method according to any one of claims 1 to 22.
